(19) Europäisches Patentamt / European Patent Office / Office européen des brevets

(11) **EP 2 019 302 A1**

(12) **EUROPEAN PATENT APPLICATION**

(43) Date of publication:
**28.01.2009 Bulletin 2009/05**

(51) Int Cl.:
***G01L 3/10*** (2006.01)

(21) Application number: **07113363.1**

(22) Date of filing: **27.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **GENERAL ELECTRIC COMPANY**
**Schenectady, NY 12345 (US)**

(72) Inventors:
• **Sihler, Christof Martin**
**85399 Bavaria (DE)**

• **Schramm, Simon Herbert**
**81667 Munchen (DE)**

(74) Representative: **Illingworth-Law, William Illingworth**
**GE**
**London Patent Operation**
**15 John Adam Street**
**London**
**WC2N 6LU (GB)**

(54) **Method and system for non-contact sensing of the torque of a shaft**

(57) Torque measurements from a rotating shaft suffer from periodic disturbances known as "shaft run-out". These are caused by inhomogeneities in the shaft such as frozen mechanical stresses or anisotropic magnetic properties and can make it difficult to identify the underlying torque signal. A method and system for removing or reducing the effect of shaft run-out is disclosed comprising measuring the torque of a rotatable shaft at a position around the circumference of the shaft and correlating the measured torque signal with data indicative of the material properties of the shaft at corresponding positions around the circumference of the shaft. A corrected torque signal is then generated in which the effect of the shaft inhomogeneities are reduced or removed providing a far clearer torque signal.

FIG 4

EP 2 019 302 A1

**Description**

This invention relates generally to sensing the torque of a rotating shaft.

Strings of prime movers and loads comprising turbine generators, electrical motors or compressors for example include drive trains of connected shaft assemblies to transmit torque. Torsional oscillations can occur in the shafts of the drive trains particularly where the mass of the moving parts is large or if the shaft has large moments of inertia combined with low damping. Relatively small amounts of power can excite a resonant torsion or oscillation in such drive trains with low damping. Excitation may be provided for example by one or both of mechanical and electrical means. Mechanical excitations can be caused by sudden changes in mechanical loading over an excitation frequency range for example. Electrical excitations can be caused by switching a load of a generator on or off or if an electric network exchanges significant energy with a generator at one or more of the natural frequencies of the shaft systems for example.

Significant damage can be caused to the drive train and couplings thereof by resonant torsional oscillations. Repairs and down-time of the drive train are extremely expensive and inconvenient.

Various systems and methods are available for damping torsional vibrations in a rotating drive train. These systems generally rely on a torque sensor in order to determine the torque of the rotating drive train and take appropriate action to suppress the resonant torsional oscillations. US 7 173 399 discloses an integrated torsional mode damping system and method for a current source convertor which dampens torsional vibration by modulating active power through an invertor or rectifier.

Many oil and gas and energy applications require measurement of the torque of a relatively large diameter shaft. Typically magnetostrictive torque sensors for such applications employ a sensing method in which a magnetic field is generated in the sensor by passing electric current through an excitation coil. This magnetic field permeates the shaft and returns back to a pick-up coil of the sensor. The output of the pick-up coil is an electrical signal that depends on the total magnetic reluctance of this loop. Part of the total magnetic reluctance is established by the air gap between the coils and the shaft and part of the total magnetic reluctance is established by the shaft itself with the magnetic reluctance of the shaft changing as a function of torque on the shaft. However, the output of such torque sensors suffer from a problem known in the art as "shaft run-out" in which a non-harmonic periodic disturbance signal appears in the output signal caused by inhomogeneities in the magnetic reluctance of the shaft. The shaft run-out phenomenon masks the torque sensor output signal and can lead to the provision of inaccurate results.

The period of the shaft run-out signal varies with the rotational speed of the shaft making it far harder to eliminate in variable speed applications such as electrically driven compressors.

A possible method of reducing the shaft run-out phenomenon from a variable speed drive shaft is to use two magnetostrictive sensors, installed 180° apart circumferentially around the rotating drive shaft. Summing the torque signals from both sensors enables the disturbances caused by shaft inhomogeneities to be reduced whilst being able to sense the magnetic reluctance of the shaft changing as a function of torque. However, the requirement for two sensors increases the size and cost of the arrangement and has limited reliability since if either sensor should fail, shaft run-out cannot then be reduced.

According to a first aspect of the present invention there is provided a non-contact torque sensing system for a rotatable shaft of a drive train, the system comprising:

a torque sensor arranged to provide a signal indicative of the measured torque of a rotating shaft;
a position sensor to provide a signal indicative of the rotational position of the shaft to be associated with the torque signal from corresponding positions on the circumference of the shaft; and
a controller to correlate the signal indicative of the torque with data indicative of material properties at corresponding circumferential positions around the shaft and to generate a corrected torque signal.

As the shaft run-out periodic signal is caused by inhomogeneities in the magnetic reluctance of the shaft, such as frozen mechanical stresses or anisotropic magnetic properties of the shaft material, by applying data indicative of the material properties of the shaft being measured, the sensed torque signals can be modulated accordingly to remove or reduce the effects of shaft run-out. Furthermore, only a single torque sensor is required, reducing costs and size requirements. If two sensors are provided, then very high levels of reliability can be achieved because even if one sensor fails, the other will still be able to provide the required signals.

The data indicative of the magnetic properties around the circumference of the shaft may be combined with or subtracted from portions of the measured torque signal relating to corresponding circumferential positions of the shaft. The controller may be arranged to sample the measured torque signal of the rotating shaft at regular intervals to provide a series of torque values and to subtract data indicative of the material properties of the shaft from the series of sampled torque values relating to corresponding circumferential positions of the shaft.

The stored data indicative of the material properties around the circumference of the shaft are preferably torque measurements obtained with no external torque applied to the shaft.

The position sensor may provide a signal indicative of the rotational position of the shaft in a number of ways. For example, the position sensor may be arranged to detect one or more magnetic markers at predetermined circumferential locations around the shaft as it rotates in order for the rotational position of the shaft to be determined. An advantage of the use of magnetic markers is that the position signal can be detected with the same pick-up coils as used for torque sensing. Alternatively the position sensor may be arranged to determine the signal indicative of rotational position of the shaft from a component connected to the rotatable shaft or a component connected to a drive train in which the rotatable shaft is provided. Such a component may be a stator or an encoder for example.

According to a second aspect of the present invention there is provided a torsional damping system for a drive train comprising a plurality of interconnected rotatable shafts, the damping system including:

a torque sensing system according to the first aspect of the present invention for sensing the torque of the drive train; and
a damping controller for using the generated drive train torque for detecting a presence of torsional vibration on the drive train corresponding to a natural frequency of a shaft of the drive train and for generating a damping control signal for damping torsional vibrations.

According to a third aspect of the present invention, there is provided a torque sensing method for reducing errors in torque sensed in a rotatable shaft of a drive train, the method comprising:

measuring the torque of a rotatable shaft at a position around the circumference of the shaft;
correlating the measured torque signal with data indicative of the magnetic properties of the shaft at corresponding positions around the circumference of the shaft; and
generating a corrected torque signal.

According to a fourth aspect of the present invention there is provided a torsional damping method for a drive train comprising a plurality of interconnected rotatable shafts, the damping method comprising:

sensing torque in a rotatable shaft in accordance with the third aspect of the present invention; and
using the generated corrected torque signal for detecting a presence of torsional vibration on the drive train corresponding to a natural frequency of a shaft of the drive train and for generating a damping control signal for damping torsional vibrations.

Embodiments of the present invention will now be described, by way of example only, with reference to the accompanying drawings, in which:

Fig 1 shows an example of inhomogeneities in a shaft such as frozen mechanical stresses or anisotropic magnetic properties;
Fig 2 shows a torque sensor positioned adjacent to a shaft;
Fig 3 shows a number of traces, the first being the actual torque on a shaft and the second and third showing output signals from a torque sensor illustrating the periodic shaft run-out spikes caused by inhomogeneities in the shaft;
Fig 4 illustrates an embodiment of the present invention;
Fig 5 illustrates another embodiment of the present invention; and
Fig 6 illustrates an output signal from a torque sensor before an embodiment of the present invention is applied to the signal (with periodic shaft run-out spikes) and after an embodiment of the present invention has been applied to the signal.

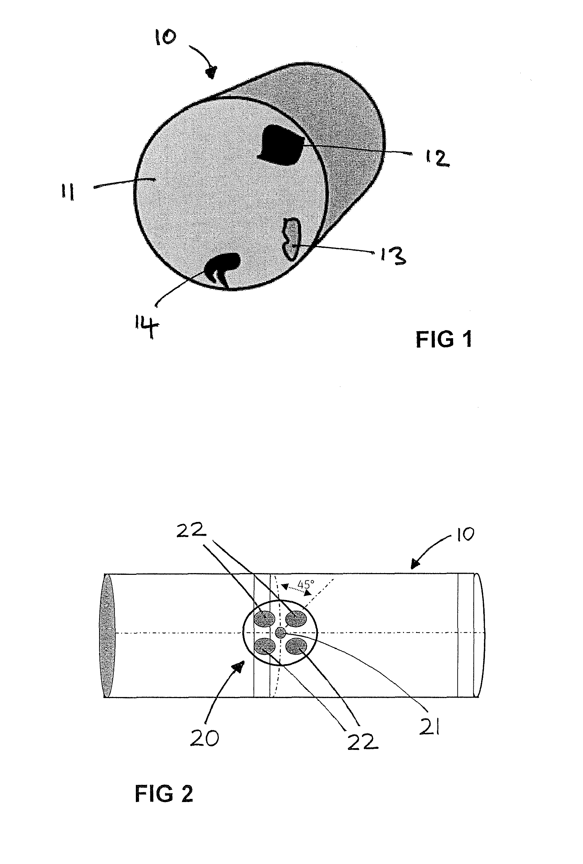

Fig 1 shows a perspective view of a rotatable drive shaft 10. The shaft 10 may for example, be coupled with one or more other rotatable drive shafts to form a drive train to transmit torque along a string of prime movers and loads such as turbine generators, electrical motors or compressors for example. The end face 11 of the shaft 10 shows a number of inhomogeneous areas 12, 13, 14 such as frozen mechanical stresses or anisotropic magnetic properties of the shaft material which lead to inhomogeneities in the magnetic reluctance of the shaft 10.

Fig 2 shows a side view of the rotatable shaft 10 with a torque sensor 20 provided at a point around the circumference of the shaft 10. Although any suitable torque sensor 20 may be used, in this example the torque sensor includes a primary or excitation coil 21 through which an electric current is passed to generate a magnetic field which permeates into the shaft 10 and returns back to measurement or pick-up coils 22. In this example there are four pick-up coils 22 equiangularly spaced 90° apart around the excitation coil 21. The measuring concept is based on the anisotropic magnetostrictive effect in ferromagnetic materials. The permeability for the magnetisation in the direction of compressive stress is different in comparison with the direction of tensile stress. The sensor measures this difference.

The output of each pick-up coil 22 is an electrical signal that depends on the total magnetic reluctance of this loop. Part of the total magnetic reluctance is established by the air gap between the coils 21, 22 and the shaft 10 and part of the total magnetic reluctance is established by the shaft 10 itself with the magnetic reluctance of the shaft changing as a function of torque on the shaft. A shaft run-out periodic disturbance signal may appear in the output signal caused by the inhomogeneities 12, 13, 14 in the magnetic reluctance of the shaft.

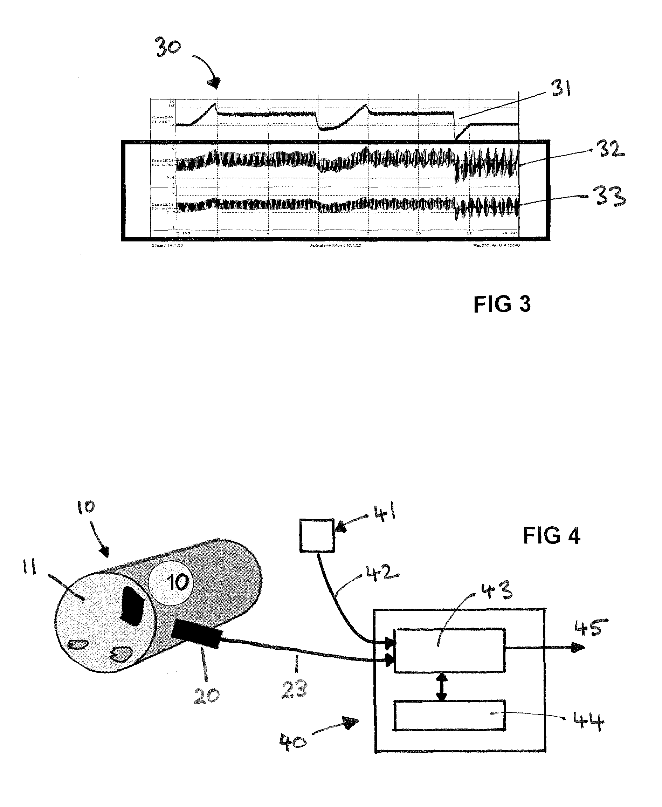

Fig 3 illustrates a series of traces. The upper trace 31 illustrates an ideal torque signal that would be obtained from a rotatable shaft without any inhomogeneities in the magnetic reluctance of the shaft 10. This shaft run-out free torque signal could be measured using a strain gauge attached to the shaft for example. In contrast, the two lower traces 32, 33 illustrate an actual trace that would typically be generated by a torque sensor 20 with a series of periodic shaft run-out spikes caused by inhomogeneities 12, 13, 14 in the shaft 10. As can be seen, these shaft run-out spikes mask the actual torque signal 31 making the torque signal unclear.

Fig 4 illustrates an embodiment of a torque sensing system in accordance with the present invention. One or both longitudinal end portions of the shaft may be connected to other rotatable shafts (not shown) to form a drive train. As shown in Figure 2, the torque sensor 20 is provided at a point on the circumference of the shaft 10 and has a connector 23 to provide a signal indicative of the measured torque of the rotating shaft 10 to a controller 40. A position sensor 41 provides a signal indicative of the rotational position of the shaft 10 to be associated with the torque signal from corresponding positions on the circumference of the shaft. The signal from position sensor 41 is provided via connector 42. The controller 40 correlates the signal indicative of the torque with data indicative of material properties at corresponding circumferential positions around the shaft. This correlation may be performed by any suitable processing means such as a CPU 43. The data indicative of material properties at corresponding circumferential positions around the shaft may be stored in a memory such as a look up table 44 which may also be provided in the controller 40. The controller is arranged to generate a corrected torque signal 45 in which the effects of shaft run-out are eliminated, or at least reduced by removing the component of the signal caused by the inherent inhomogeneous properties of the shaft.

Alternatively a "pattern recognition scheme" based on the known data in the memory can be used to detect shaft position. For example one rotation of the shaft or period can be assumed to end after every second dynamic maximum detected by the torque sensor 20.

The corrected torque output signal 45 may be used in any suitable way such as in a torsional damping system for a drive train of which the rotatable shaft 10 forms a part. A damping controller (which may form part of controller 40) may use the generated corrected torque signal 45 for detecting a presence of torsional vibration on the drive train corresponding to a natural frequency of a shaft of the drive train and may then generate a damping control signal for damping torsional vibrations of the drive train in any suitable way as is known to those skilled in the art, such as is disclosed in US 7 173 399 for example.

The data indicative of the inhomogeneous metallic properties of the shaft 10 may be torque measurements from sensor 20 from around the circumference of the shaft 10 when no external torque is applied to the shaft. Such measurements may be made during commissioning of the sensor system and stored in the memory 44 for subsequent operational use.

The position sensor may be arranged to detect the rotational position of the shaft 10 for association with the corresponding portions of the torque signal in any suitable manner. For example, the position sensor 41 may be arranged to detect the passage of one or more magnetic markers at predetermined circumferential locations around the shaft as it rotates in order for the rotational position of the shaft to be determined. Alternatively, the position sensor may form a part of an existing component associated with or connected to the rotatable shaft 10 or to a drive train of which the rotatable shaft 10 forms a part such as a stator of a machine connected to the drive train or an encoder connected to the drive train. Such components such as a stator or an encoder are typically present on drive trains of connected shaft assemblies and so output signals from such a component could easily be employed by the controller 40 to be indicative of the rotational position of the shaft for association with the torque signal relating to corresponding circumferential positions around the shaft 10.

Although the torque sensor 20 and position sensor 41 are shown connected to the controller 40 with physical connectors 21, 42 respectively such as cables, it will be appreciated by the person skilled in the art that communication between the sensors 20, 41 and controller 40 may be performed by any suitable means such as radio transmitters for example.

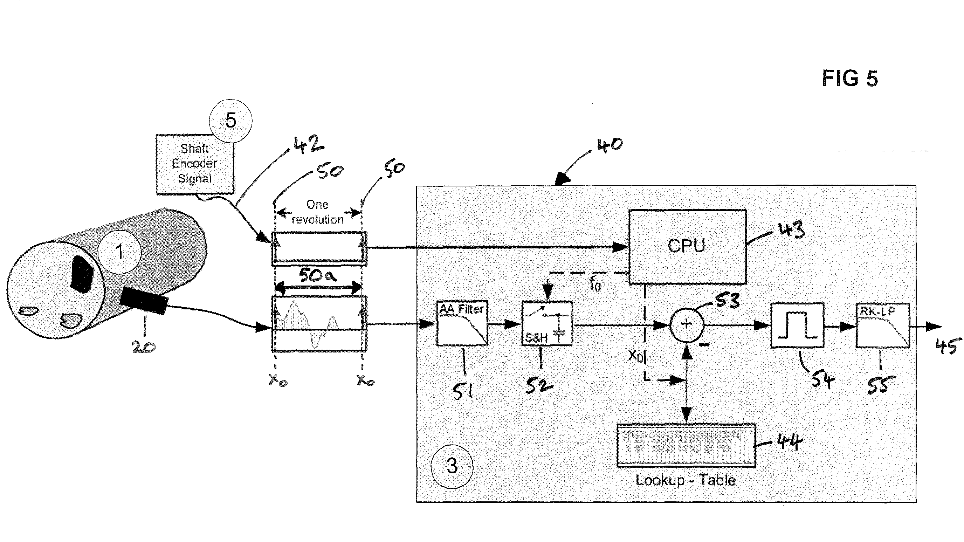

Figure 5 shows a more detailed example of a torque sensing system. As can be seen, the signal from torque sensor 20 is arranged into portions 50a corresponding to one revolution of the shaft 10 as indicated by dotted lines 50. The arrangement into portions corresponding to one revolution of the shaft is performed by the controller 40 in conjunction with the signal from the position sensor 41, which in this example is a shaft encoder signal. The shaft position signal 42 is used to select the start position of each one revolution portion 50a of the torque signal 21 to correspond to the start position ($x_0$) of the material properties of the shaft 10 stored in memory 44. The torque signal arranged or marked to indicate the beginning of data relating to each revolution of the shaft 10 is then passed through a low pass filter 51 provided in the controller 50. The low pass filter 51 is an anti aliasing filter used to reduce signal information with higher frequency than the sampling device is able to resolve. The low pass filter 51 may also reduce the effect of high frequency noise. The torque signal is then sampled using the sample and hold circuit 52. The frequency ($f_0$) of the sampling is dependent upon the rotational speed of the shaft 10 which is calculated by CPU 43 from the shaft encoder signal 42. The frequency ($f_0$) of the sampling is selected such that the number of sample values corresponds to the amount of data in the memory 44 and is provided by the following equation:

$$f_0 = \frac{\text{rotational speed of shaft (revs/minute)}}{\text{number of stored values in memory}}$$

The subtractor 53 then subtracts the stored material properties provided in memory 44 from the sampled torque signal provided by sample and hold signal 52. The output of the subtractor 53 may be pulsed 54 and low pass filtered 55 to reduce noise caused by digital conversion and processing of the data, known as reconstruction low pass, before being output as a corrected torque signal 45.

The torque signal is preferably measured and processed continuously. Using data blocks representing one revolution would add time delay to the processed torque signal, but could be applied in cases where the time delay is acceptable. The shaft position signal 42 is used to trigger the real-time control to position a look-up table pointer and to calculate the current revolution speed in order to adjust the sampling frequency. The sampling frequency adjustment is one approach to accommodate variable speeds of the shaft. Another approach would be for example to sample with constant, high frequency during operation and to calculate mean values of the revolution speed proportional to the number of samples stored in the memory or look-up table.

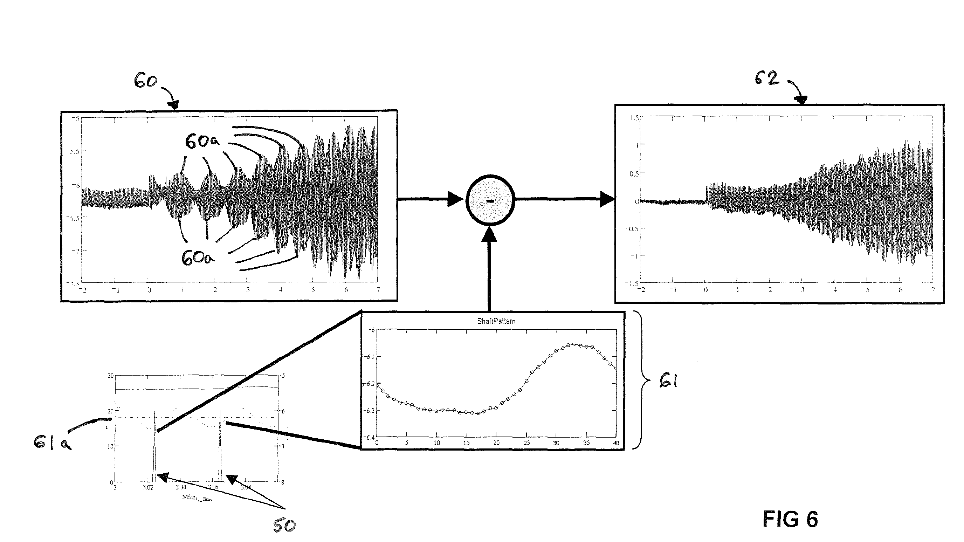

Figure 6 illustrates a typical waveform 60 produced by a simple torque sensor which clearly demonstrates the periodic disturbances 60a caused by shaft run-out. Plot 61 illustrates data relating to inhomogeneities of a shaft 10 stored in the memory 44 and which corresponds to one revolution of the shaft 10. The start and end points of the shaft material property data may be determined from signals 50 corresponding to the passage of a marker on the circumference of the shaft 10 or by the data signal crossing a horizontal axis 61a through the data twice. Waveform 62 illustrates a corrected torque signal 45 after the inherent inhomogeneities of the shaft as indicated by data 61 from memory 44 are subtracted from signal 60 by the controller 40. The removal of the spikes 60a caused by shaft run-out from these experimental results can be clearly seen such that the torque on the shaft can be determined far more easily and precisely.

As explained above, the torque sensing system 40 as illustrated in particular in Figures 4 and 5 may be connected to a shaft 10 which forms part of a drive train. The corrected torque signal 45 may then be used in a torsional damping system for detecting the presence of torsional vibration on the drive train at a natural frequency of a shaft within the drive train and for generating a corresponding damping control signal such that the torsional vibrations may be damped.

Many modification may be made to the examples described above while still falling within the scope of the present invention. For example, the controller 40 may be provided by a processing means of another or higher level system in which the provision of a shaft run-out corrected torque signal forms a part. As explained above, any suitable method of producing a position signal may be used, such as sensing a marker on the circumference of the shaft 10, deriving the signal from a component connected to the rotatable shaft 10, determining when an output signal crosses a horizontal axis twice or using a pattern recognition scheme for example.

**Claims**

1. A non-contact torque sensing system for a rotatable shaft of a drive train, the system comprising:

    a torque sensor arranged to provide a signal indicative of the measured torque of a rotating shaft;
    a position sensor to provide a signal indicative of the rotational position of the shaft to be associated with the torque signal from corresponding positions on the circumference of the shaft; and
    a controller to correlate the signal indicative of the torque with data indicative of material properties at corresponding circumferential positions around the shaft and to generate a corrected torque signal.

2. A system according to claim 1, wherein the data indicative of the material properties around the circumference of the shaft are combined with portions of the measured torque signal relating to corresponding circumferential positions of the shaft.

3. A system according to claim 1 or claim 2, wherein the stored data indicative of the material properties around the circumference of the shaft are torque measurements obtained with no external torque applied to the shaft.

4. A system according to any one of the preceding claims, wherein the position sensor is arranged to detect one or more magnetic markers at predetermined circumferential locations around the shaft as it rotates in order for the rotational position of the shaft to be determined.

5. A system according to any one of claims 1 to 3, wherein the position sensor is arranged to determine the signal indicative of rotational position of the shaft from a component connected to the rotatable shaft or a component connected to a drive train in which the rotatable shaft is provided.

6. A system according to claim 5, wherein the component is a stator.

7. A system according to claim 5, wherein the component is an encoder.

8. A system according to any one of the preceding claims, wherein the rotational position of the shaft and the torque are measured with the same sensor.

9. A system according to any one of the preceding claims, wherein the rotational position of the shaft is determined based on the known data indicative of material properties at circumferential positions around the shaft using a pattern recognition scheme.

10. A system according to any one of the preceding claims, wherein the torque sensor is arranged to provide a signal indicative of the measured torque of a rotating shaft based on the magnetostrictive effect of the shaft material.

11. A torsional damping system for a drive train comprising a plurality of interconnected rotatable shafts, the damping system including:

   a torque sensing system according to any one of the preceding claims for sensing the torque of the drive train and a damping controller for using the generated drive train torque for detecting a presence of torsional vibration on the drive train corresponding to a natural frequency of a shaft of the drive train and for generating a damping control signal for damping torsional vibrations.

12. A torque sensing method for reducing errors in torque sensed in a rotatable shaft of a drive train, the method comprising:

   measuring the torque of a rotatable shaft at a position around the circumference of the shaft;
   correlating the measured torque signal with data indicative of the material properties of the shaft at corresponding positions around the circumference of the shaft; and
   generating a corrected torque signal.

13. A method according to claim 12, wherein the data indicative of the material properties of the shaft are combined with the torque measurements relating to corresponding circumferential positions of the shaft.

14. A method according to claim 12 or claim 13, wherein the data indicative of the material properties around the circumference of the shaft are obtained by measuring the torque of the shaft at those circumferential positions with no external torque applied to the shaft.

15. A method according to any one of claims 12 to 14, wherein a rotational position of the shaft is measured with the same sensor that measures the torque.

16. A method according to any one of claims 12 to 15, wherein a rotational position of the shaft is determined based on the known data indicative of material properties at circumferential positions around the shaft using a pattern recognition scheme.

17. A torsional damping method for a drive train comprising a plurality of interconnected rotatable shafts, the damping method comprising:

sensing torque in a rotatable shaft in accordance with any one of claims 12 to 16 and
using the generated corrected torque signal for detecting a presence of torsional vibration on the drive train corresponding to a natural frequency of a shaft of the drive train and for generating a damping control signal for damping torsional vibrations.

FIG 1

FIG 2

**FIG 3**

**FIG 4**

FIG 5

CPU 43

RK-LP 55

S5 54

S3

Lookup - Table 44

x[0]

f₀

S&H 52

AA Filter 51

3

40

50

One revolution

50a

Shaft Encoder Signal 42

5

1

20

FIG 6

**European Patent Office**     **EUROPEAN SEARCH REPORT**

Application Number

EP 07 11 3363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 062 062 A (NISHIBE YUJI ET AL) 29 October 1991 (1991-10-29) Abstract * figures 1,2,5,13,18,22 * | 1-10, 12-16 | INV. G01L3/10 |
| Y | * columns 1-5 * * columns 14-16 * * columns 20-22 * * columns 29-32 * ----- | 11,17 | |
| X | DE 32 06 503 C1 (LICENTIA GMBH) 25 August 1983 (1983-08-25) * abstract * * figure 2 * * columns 3-4 * ----- | 1-3,5, 10,12-14 | |
| Y | GB 2 429 779 A (GEO KINGSBURY MACHINE TOOLS LT) 7 March 2007 (2007-03-07) * page 4, lines 24-29 * * figures 1,5-7 * * pages 1-3 * * page 7, lines 1-3 * * page 9, lines 1-3 * * page 15, lines 5-12 * * claims 1-7 * ----- | 11,17 | TECHNICAL FIELDS SEARCHED (IPC)<br><br>G01L |
| Y | US 5 359 269 A (WEDEEN ROBERT S ET AL) 25 October 1994 (1994-10-25) * abstract * * figure 1 * * columns 1-3 * ----- | 11,17 | |
| A | EP 0 675 342 A (SENSORTECH LP) 4 October 1995 (1995-10-04) * the whole document * ----- | 4,8,9, 15,16 | |
|  | -/-- | | |

The present search report has been drawn up for all claims

| Place of search | Date of completion of the search | Examiner |
|---|---|---|
| The Hague | 7 February 2008 | NELVA-PASQUAL, F |

EPO FORM 1503 03.82 (P04C01)

European Patent
Office

**EUROPEAN SEARCH REPORT**

Application Number

EP 07 11 3363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 948 381 B1 (DISCENZO FREDERICK M) 27 September 2005 (2005-09-27) * the whole document * ----- | 8,9,15, 16 | |
| A | US 2004/050180 A1 (ABE FUMIHIKO ET AL) 18 March 2004 (2004-03-18) * the whole document * ----- | 5,6,8,15 | |

TECHNICAL FIELDS
SEARCHED          (IPC)

The present search report has been drawn up for all claims

| Place of search | Date of completion of the search | Examiner |
|---|---|---|
| The Hague | 7 February 2008 | NELVA-PASQUAL, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 11 3363

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2008

| Patent document cited in search report | | Publication date | Patent family member(s) | | Publication date |
|---|---|---|---|---|---|
| US 5062062 | A | 29-10-1991 | NONE | | |
| DE 3206503 | C1 | 25-08-1983 | NONE | | |
| GB 2429779 | A | 07-03-2007 | NONE | | |
| US 5359269 | A | 25-10-1994 | NONE | | |
| EP 0675342 | A | 04-10-1995 | NONE | | |
| US 6948381 | B1 | 27-09-2005 | US | 6981423 B1 | 03-01-2006 |
| US 2004050180 | A1 | 18-03-2004 | US | 2005247140 A1 | 10-11-2005 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7173399 B